(19)

**Europäisches Patentamt**

**European Patent Office**

**Office européen des brevets**

(11) **EP 4 676 122 A1**

(12) **EUROPEAN PATENT APPLICATION**

published in accordance with Art. 153(4) EPC

(43) Date of publication:
07.01.2026 Bulletin 2026/02

(21) Application number: 24774043.4

(22) Date of filing: 15.03.2024

(51) International Patent Classification (IPC):
*H04W 36/00* (2009.01)   *H04W 4/029* (2018.01)

(52) Cooperative Patent Classification (CPC):
H04W 4/021; H04W 4/029; H04W 36/00;
H04W 36/32; H04W 72/21; H04W 76/27

(86) International application number:
PCT/CN2024/082007

(87) International publication number:
WO 2024/193478 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.03.2023   CN 202310309453
10.11.2023   CN 202311506878

(71) Applicant: HUAWEI TECHNOLOGIES CO., LTD.
Shenzhen, Guangdong 518129 (CN)

(72) Inventors:
• LI, Jie
  Shenzhen, Guangdong 518129 (CN)
• PENG, Wenjie
  Shenzhen, Guangdong 518129 (CN)

(74) Representative: Maiwald GmbH
Engineering
Elisenhof
Elisenstrasse 3
80335 München (DE)

(54) **COMMUNICATION METHOD AND APPARATUS**

(57) Embodiments of this application provide a communication method and apparatus. The method includes: After a terminal device receives a first message from a first network device, when a first condition is satisfied, a second message sent by the terminal device to a second network device includes indication information. According to the method, the second network device obtains the indication information once instead of a plurality of times, to avoid a problem such as a waste of air interface resources caused by occupation of a large quantity of air interface resources between the terminal device and the network device. In addition, because communication between the terminal device and the network device can be reduced, communication interference to another terminal device can be reduced, and power consumption of the terminal device can be reduced.

Terminal device | First network device | Second network device

S501: First message

S502: Second message

FIG. 5

EP 4 676 122 A1

## Description

### CROSS-REFERENCE TO RELATED APPLICATIONS

This application claims priorities to Chinese Patent Application No. 202310309453.1, filed with the China National Intellectual Property Administration on March 17, 2023, and entitled "COMMUNICATION METHOD AND APPARATUS", and to Chinese Patent Application No. 202311506878.8, filed with the China National Intellectual Property Administration on November 10, 2023, and entitled "COMMUNICATION METHOD AND APPARATUS", both of which are incorporated herein by reference in their entireties.

### TECHNICAL FIELD

The present invention relates to the field of wireless communication technologies, and in particular, to a communication method and apparatus.

### BACKGROUND

Unmanned aerial vehicles (unmanned aerial vehicle, UAV) have attracted much attention because of small sizes, high mobility, and low costs. With maturity of unmanned driving technologies, unmanned aerial vehicles can fly based on a plurality of flight modes. A fixed mode is one of the plurality of flight modes. If the unmanned aerial vehicle flies in the fixed mode, the unmanned aerial vehicle needs to determine a flight path of the unmanned aerial vehicle in advance and report the flight path to a network device. The network device performs network configuration based on the flight path, to manage and control the unmanned aerial vehicle and ensure safe flight of the unmanned aerial vehicle.

In a flight process, the unmanned aerial vehicle passes through coverage areas of a plurality of network devices, and is consequently handed over between different network devices. How to enable a network device to which the unmanned aerial vehicle is handed over, to obtain a latest flight path is an urgent problem to be resolved.

### SUMMARY

This application provides a communication method and apparatus, to resolve a problem that a network device after handover cannot obtain a latest flight path.

According to a first aspect, an embodiment of this application provides a communication method. The method is performed by a terminal device or a module or a chip in the terminal device. Herein, an example in which the method is performed by the terminal device is used for description. The method includes: The terminal device receives a first message from a first network device, where the first message indicates handing over the terminal device to a second network device. The terminal device sends a second message to the second network device, where the second message includes indication information when a first condition is satisfied, the indication information indicates that a first flight path is available for the terminal device, and the first flight path is a path on which the terminal device is to fly.

In the method, when the first condition is satisfied, the second message sent by the terminal device to the second network device includes the indication information, so that it can be effectively ensured that the second network device can obtain a flight path of the terminal device in a timely manner. In addition, the second network device obtains the indication information once instead of a plurality of times, to avoid a problem such as a waste of air interface resources caused by occupation of a large quantity of air interface resources between the terminal device and the network device. In addition, because communication between the terminal device and the network device can be reduced, communication interference to another terminal device can be reduced, and power consumption of the terminal device can be reduced.

In a possible design, the first condition is that the terminal device does not send the indication information to the first network device, or the first condition is that the terminal device does not send the first flight path to the first network device. This design provides a determining manner of the first condition.

In a possible design, that the terminal device does not send the indication information to the first network device may include: Before the terminal device receives the first message from the first network device, the terminal device does not send the indication information to the first network device. This design provides a determining manner of the first condition.

In a possible design, that the second message includes the indication information when the first condition is satisfied may include: When the first condition and a second condition are satisfied, the second message includes the indication information, where the second condition may include: a change range between the first flight path and a second flight path is in a preset range, and the first flight path is a flight path obtained by updating the second flight path. This design provides a manner of determining whether the second message includes the indication information.

In a possible design, that the change range between the first flight path and the second flight path is in the preset range may include: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range. The method provides a plurality of solutions for efficiently determining the second condition.

In a possible design, the method may further include: The terminal device sends a third message to the second network device, where when the second message includes the indication information, the third message does not include the indication information.

In a possible design, the method may further include: The terminal device sends a third message to the second network device, where when the second message does not include the indication information, the third message includes the indication information.

In a possible design, a configuration manner of the second condition includes a manner of configuring by the first network device or a manner of configuring by the second network device. This design provides the configuration manner of the second condition.

In a possible design, the first message is a radio resource control RRC reconfiguration message, and the second message is an RRC reconfiguration complete message. This design provides a determining manner of the first message and a determining manner of the second message.

According to a second aspect, an embodiment of this application provides a communication method. The method is performed by a second network device or a module or a chip in the second network device. Herein, an example in which the method is performed by the second network device is used for description. The method includes: The second network device sends a first message to a first network device, where the first message indicates handing over a terminal device to the second network device. The second network device receives a second message from the terminal device, where the second message includes indication information when a first condition is satisfied, the indication information indicates that a first flight path is available for the terminal device, and the first flight path is a path on which the terminal device is to fly. In the method, when the first condition is satisfied, the second message sent by the terminal device to the second network device includes the indication information, so that it can be effectively ensured that the second network device can obtain a flight path of the terminal device in a timely manner. In addition, the second network device obtains the indication information once instead of a plurality of times, to avoid a problem such as a waste of air interface resources caused by occupation of a large quantity of air interface resources between the terminal device and the network device. In addition, because communication between the terminal device and the network device can be reduced, communication interference to another terminal device can be reduced, and power consumption of the terminal device can be reduced.

In a possible design, the first condition is that the terminal device does not send the indication information to the first network device, or the first condition is that the terminal device does not send the first flight path to the first network device. This design provides a determining manner of the first condition.

In a possible design, that the second message includes the indication information when the first condition is satisfied may include: When the first condition and a second condition are satisfied, the second message includes the indication information, where the second condition may include: a change range between the first flight path and a second flight path is in a preset range, and the first flight path is a flight path obtained by updating the second flight path. This design provides a manner of determining whether the second message includes the indication information.

In a possible design, that the change range between the first flight path and the second flight path is in the preset range may include: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range. The method provides a plurality of solutions for efficiently determining the second condition.

In a possible design, the method may further include: The second network device receives a third message from the terminal device, where when the second message includes the indication information, the third message does not include the indication information.

In a possible design, the method may further include: The second network device receives a third message from the terminal device, where when the second message does not include the indication information, the third message includes the indication information.

In a possible design, a configuration manner of the second condition includes a manner of configuring by the first network device or a manner of configuring by the second network device. This design provides the configuration manner of the second condition.

In a possible design, the first message is a radio resource control RRC reconfiguration message, and the second message is an RRC reconfiguration complete message. This design provides a determining manner of the first message and a determining manner of the second message.

According to a third aspect, an embodiment of this application provides a communication method. The method is performed by a terminal device or a module or a chip in the terminal device. Herein, an example in which the method is performed by the terminal device is used for description. The method includes: The terminal device sends indication information to a first network device, where the indication information indicates that a first flight path is available for the terminal device. Then, the terminal device receives a first message from the first network device, where the first message indicates handing over the terminal device to a second network device, the first message includes request information and/or a second condition, the request information indicates the terminal device to report a flight path to the second network device, and the second condition is a trigger condition for the terminal device to report a flight path. Finally, the terminal device sends a second message to the second network device, where the second message includes the first flight path, and the first flight path is a path on which the terminal device is to fly. In the method, after receiving the indication information, the second network device sends, to the first network device, the first message that includes the request information and/or the second condition. The terminal device sends the first flight path to the second network device based on the first message. It can be learned that the second network device can obtain the first flight path in a network device handover procedure, instead of obtaining the first flight path only after the network device handover completes. This can effectively ensure that the second network device obtains a flight path in a timely manner and performs network configuration based on the flight path.

In a possible design, the second condition includes: a change range between the first flight path and a second flight path is in a preset range, and the first flight path is a flight path obtained by updating the second flight path. This design provides a solution for efficiently determining the second condition.

In a possible design, that the change range between the first flight path and the second flight path is in the preset range may include: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range. The method provides a plurality of solutions for efficiently determining the second condition.

In a possible design, a configuration manner of the second condition includes a manner of configuring by the first network device or a manner of configuring by the second network device. This design provides the configuration manner of the second condition.

In a possible design, the first message is a radio resource control RRC reconfiguration message, and the second message is an RRC reconfiguration complete message. This design provides a determining manner of the first message and a determining manner of the second message.

In a possible design, the indication information includes at least one piece of changed waypoint information in the first flight path. In the method, the second network device determines, based on the at least one piece of changed waypoint information in the first flight path in the indication information, whether to upload the flight path, so that the terminal device does not determine whether to upload the flight path, to reduce power consumption of the terminal device. In addition, generally, a computing capability of the terminal device is far lower than that of a network device. The second network device determines whether to upload the flight path, so that communication efficiency can be further improved.

According to a fourth aspect, an embodiment of this application provides a communication method. The method is performed by a first network device or a module or a chip in the first network device. Herein, an example in which the method is performed by the first network device is used for description. The method includes: The first network device receives indication information from a terminal device, where the indication information indicates that a first flight path is available for the terminal device. Then, the first network device sends a first message to the terminal device, where the first message indicates handing over the terminal device to a second network device, the first message includes request information and/or a second condition, the request information indicates the terminal device to report a flight path to the second network device, the second condition is a trigger condition for the terminal device to report a flight path, the first message further indicates the terminal device to send a second message to the second network device, the second message includes the first flight path, and the first flight path is a path on which the terminal device is to fly. In the method, after receiving the indication information, the second network device sends, to the first network device, the first message that includes the request information and/or the second condition. The terminal device sends the first flight path to the second network device based on the first message. It can be learned that the second network device can obtain the first flight path in a network device handover procedure, instead of obtaining the first flight path only after the network device handover completes. This can effectively ensure that the second network device obtains a flight path in a timely manner and performs network configuration based on the flight path.

In a possible design, the second condition includes: a change range between the first flight path and a second flight path is in a preset range, and the first flight path is a flight path obtained by updating the second flight path. This design provides a solution for efficiently determining the second condition.

In a possible design, that the change range between the first flight path and the second flight path is in the preset range may include: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range. The method provides a plurality of solutions for efficiently determining the second condition.

In a possible design, a configuration manner of the second condition includes a manner of configuring by the first network device or a manner of configuring by the second network device. This design provides the configuration manner of the second condition.

In a possible design, the first message is a radio resource control RRC reconfiguration message, and the second message is an RRC reconfiguration complete message. This design provides a determining manner of the first message and a determining manner of the second message.

In a possible design, the indication information includes at least one piece of changed waypoint information in the first flight path. In the method, the second network device determines, based on the at least one piece of changed waypoint information in the first flight path in the indication information, whether to upload the flight path, so that the terminal device does not determine whether to upload the flight path, to reduce power consumption of the terminal device. In addition, generally, a computing capability of the terminal device is far lower than that of a network device. The second network device determines whether to upload the flight path, so that a communication speed can be further improved.

According to a fifth aspect, an embodiment of this application provides a communication method. The method is performed by a second network device or a module or a chip in the second network device. Herein, an example in which the method is performed by the second network device is used for description. The method includes: The second network device obtains a second condition from a first network device, and updates the second condition when the second network device satisfies a third condition. Then, the second network device sends a first message to the first network device, where the first message indicates handing over a terminal device to the second network device, the first message includes request information and/or a second condition, the request information indicates the terminal device to report a flight path to the second network device, the second condition is a trigger condition for the terminal device to report a flight path, and a configuration manner of the second condition includes a manner of configuring by the second network device. Finally, the second network device receives a second message from the terminal device, where the second message includes a first flight path, and the first flight path is a path on which the terminal device is to fly.

In the method, after receiving the indication information, the second network device sends, to the first network device, the first message that includes the request information and/or the second condition. The terminal device sends the first flight path to the second network device based on the first message. It can be learned that the second network device can obtain the first flight path in a network device handover procedure, instead of obtaining the first flight path only after the network device handover completes. This can effectively ensure that the second network device obtains a flight path in a timely manner and performs network configuration based on the flight path.

In a possible design, the method may further include: When the second network device does not satisfy the third condition, the first message includes the request information, and the configuration manner of the second condition includes a manner of configuring by the first network device. This design provides the configuration manner of the second condition.

In a possible design, the second condition includes: a change range between the first flight path and a second flight path is in a preset range, and the first flight path is a flight path obtained by updating the second flight path. This design provides a solution for efficiently determining the second condition.

In a possible design, that the change range between the first flight path and the second flight path is in the preset range may include: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range. The method provides a plurality of solutions for efficiently determining the second condition.

In a possible design, the first message is a radio resource control RRC reconfiguration message, and the second message is an RRC reconfiguration complete message. This design provides a determining manner of the first message and a determining manner of the second message.

According to a sixth aspect, an embodiment of this application provides a communication method. The method is performed by a terminal device or a module or a chip in the terminal device. Herein, an example in which the method is performed by the terminal device is used for description. The method includes: The terminal device receives a first message from a first network device, where the first message indicates handing over the terminal device to a second network device. The terminal device sends a third message to the second network device, where the third message is used to transmit first assistance information of the terminal device, the third message does not include indication information, the indication information indicates that a first flight path is available for the terminal device, and the first flight path is a path on which the terminal device is to fly.

In the method, the third message sent by the terminal device to the second network device does not include the indication information, so that a problem that the second network device repeatedly obtains the indication information can be avoided.

In a possible design, that the terminal device sends the third message to the second network device may include: The terminal device sends the third message to the second network device when a fifth condition is satisfied.

In a possible design, the fifth condition includes at least one of the following: a fourth message is sent to the second network device in a first time period, or the terminal device is configured to provide the fourth message, where the fourth message is used to transmit the first assistance information of the terminal device.

In a possible design, the fourth message is determined based on first configuration information.

In a possible design, the first configuration information includes a cell group and/or indication information.

In a possible design, the first time period is determined based on the first message received by the terminal device from the first network device.

According to a seventh aspect, an embodiment of this application provides a communication method. The method is performed by a terminal device or a module or a chip in the terminal device. Herein, an example in which the method is performed by the terminal device is used for description. The method includes: The terminal device receives a first message from a first network device, where the first message indicates handing over the terminal device to a second network device. If a fifth condition is satisfied, the terminal device does not send a third message to the second network device, where the third message is used to transmit first assistance information of the terminal device.

In the method, the terminal device does not send the third message to the second network device, so that a problem that the second network device repeatedly obtains indication information can be avoided.

In a possible design, the fifth condition includes at least one of the following: a fourth message is sent to the second network device in a first time period, or the terminal device is configured to provide the fourth message, where the fourth message is used to transmit the first assistance information of the terminal device.

In a possible design, the fourth message is determined based on first configuration information.

In a possible design, the first configuration information includes a cell group and/or indication information.

In a possible design, the first time period is determined based on the first message received by the terminal device from the first network device.

According to an eighth aspect, this application further provides a communication apparatus. The communication apparatus implements any method provided in any one of the first aspect to the fifth aspect. The communication apparatus may be implemented by hardware, or may be implemented by executing corresponding software by hardware. The hardware or software includes one or more units or modules corresponding to the foregoing functions.

In a possible design, the communication apparatus includes a processor. The processor is configured to support the communication apparatus in performing a corresponding function performed by the terminal device, the first network device, or the second network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal apparatus.

In a possible design, the communication apparatus includes corresponding functional modules respectively configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit, a sending unit, and a receiving unit. These units may perform corresponding functions in the foregoing method examples. For details, refer to descriptions in the method provided in any one of the first aspect to the seventh aspect. Details are not described herein.

According to a ninth aspect, an embodiment of this application further provides a communication apparatus. The communication apparatus includes a module/unit for performing any method provided in any one of the first aspect to the seventh aspect. These modules/units may be implemented by hardware, or may be implemented by executing corresponding software by hardware.

According to a tenth aspect, an embodiment of this application provides a communication apparatus, including a memory and a processor. The processor is configured to execute a computer program or instructions stored in the memory, so that the communication apparatus implements any method provided in any one of the first aspect to the seventh aspect.

According to an eleventh aspect, an embodiment of this application further provides a computer-readable storage medium. The computer-readable storage medium includes a computer program. When the computer program runs on a communication apparatus, the computer-readable storage medium is enabled to implement any method provided in any one of the first aspect to the seventh aspect.

According to a twelfth aspect, an embodiment of this application further provides a computer program product. When the computer program product runs on a communication apparatus, the communication apparatus is enabled to implement the method according to any one of the first aspect to the seventh aspect and the possible designs of the first aspect to the seventh aspect.

According to a thirteenth aspect, a chip is provided. The chip includes a processor, and may further include a memory, and is configured to implement the method in any one of the first aspect to the seventh aspect and the possible implementations of any one of the aspects. The chip may include a chip, or may include a chip and another discrete device.

According to a fourteenth aspect, a communication system is provided, including a terminal device and a second network device.

The terminal device is configured to implement the method in the first aspect and any possible implementation of the first aspect. The second network device is configured to implement the method in the second aspect and any possible implementation of the second aspect.

According to a fifteenth aspect, a communication system is provided, including a terminal device, a first network device, and a second network device.

The terminal device is configured to implement the method in the third aspect and any possible implementation of the third aspect. The first network device is configured to implement the method in the fourth aspect and any possible implementation of the fourth aspect. The second network device is configured to implement the method in the fifth aspect and any possible implementation of the fifth aspect.

These or other aspects of this application are more concise and easier to understand in the description of the following embodiments.

BRIEF DESCRIPTION OF DRAWINGS

FIG. 1 is a schematic flowchart of a connection setup method according to an embodiment of this application;

FIG. 2 is a schematic flowchart of a flight path obtaining method according to an embodiment of this application;

FIG. 3 is a diagram of a structure of flight of an unmanned aerial vehicle according to an embodiment of this application;

FIG. 4A and FIG. 4B are a schematic flowchart of a network device handover method according to an embodiment of this application;

FIG. 5 is a schematic flowchart of a communication method according to an embodiment of this application;

FIG. 6 is a schematic flowchart of a communication method according to an embodiment of this application;

FIG. 7 is a diagram of a structure of a communication apparatus according to an embodiment of this application; and

FIG. 8 is a diagram of a structure of a communication apparatus according to an embodiment of this application.

DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment.

Embodiments of this application may be applied to various mobile communication systems, for example, a new radio (new radio, NR) system, a global system for mobile communication (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an evolved long term evolution (evolved long term evolution, eLTE) system, and another communication system such as a future communication system. Details are not limited herein.

User equipment in this application may also be referred to as a terminal device, is a device having a wireless transceiver function, and may be deployed on land, including an indoor or outdoor terminal device, a handheld or vehicle-mounted terminal device; or may be deployed on water (for example, on a ship); or may be deployed in the air (for example, on aircraft, a balloon, or a satellite). The terminal device may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal (for example, a remote control or an unmanned aerial vehicle) in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device in this application mainly relates to an unmanned aerial vehicle or another aircraft.

The terminal device may establish a connection to an operator network through an interface provided by the operator network, and use services such as data and/or voice provided by the operator network. The terminal device may further access a data network (data network, DN) via the operator network, and use an operator service deployed on the DN and/or a service provided by a third party. The third party may be a service party other than the operator network and the terminal device, and may provide a service such as data and/or voice for the terminal device. A specific representation form of the third party may be specifically determined based on an actual application scenario, and is not limited herein.

An RAN is a subnet of the operator network, and is an implementation system between a service node in the operator network and the terminal device. To access the operator network, the terminal device first accesses the RAN, and then may be connected to the service node in the operator network via the RAN. A RAN device in this application is a device that provides a radio communication function for the terminal device, and the RAN device is also referred to as an access network device. The RAN device in this application includes but is not limited to: a next-generation base station (g NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), a transmitting and receiving point (transmitting and receiving point, TRP), a transmitting point (transmitting point, TP), a mobile switching center, and the like.

A user plane network element serves as an interface to a data network, and implements functions such as user plane data forwarding, session/flow-level charging statistics, and bandwidth throttling, that is, packet routing and forwarding, quality of service (quality of service, QoS) handling for user plane data, and the like. In the 5G communication system, the user plane network element may be a UPF network element.

A mobility management network element is mainly configured to perform mobility management, access management, and the like. In the 5G communication system, the mobility management network element may be an AMF network element, and mainly performs functions such as mobility management and access authentication/authorization. In addition, the AMF network element is further responsible for transport for a user policy between the terminal and the PCF network element.

In this application, a network element may also be referred to as a device. For example, the AMF network element may be referred to as an AMF device, and the UPF network element may be referred to as a UPF device. Details are not described herein again.

In this application, when an unmanned aerial vehicle flies in a fixed mode, generally, the unmanned aerial vehicle uploads a flight path to a network device, and the network device ensures high reliability and high security in a flight process of the unmanned aerial vehicle based on the flight path. In addition, the network device may perform access control on the flight path of the unmanned aerial vehicle, so that the unmanned aerial vehicle does not fly into a no-fly zone.

The flight path includes at least one piece of waypoint information. The 1st piece of waypoint information in the flight path may include location information corresponding to a take-off point of the unmanned aerial vehicle and a current time point, or include information about a location that the unmanned aerial vehicle is to fly through in a future time period and a time point corresponding to arrival at the location. Waypoint information other than the first waypoint information in the flight path may include information about a location that the unmanned aerial vehicle is to fly through in a future time period and a time point corresponding to arrival at the location information. Each piece of waypoint information may further include a number of the waypoint information in the flight path. For example, a number included in the 1st piece of waypoint information in the flight path is 1. It should be understood that the location information may be location information in a longitude and latitude coordinate system, or may be location information in a city coordinate system, or may be location information in a rectangular coordinate system, or the like. This is not limited herein.

An example in which each piece of waypoint information in the flight path is information about a location that the unmanned aerial vehicle is to fly through in a future period of time and a time point corresponding to arrival at the location information is used for description. For example, a flight path determined by the unmanned aerial vehicle is Shanghai (10:00:00)-Suzhou (12:00:00)-Beijing (16:00:00), and the flight path includes three pieces of waypoint information. An example in which the 1st piece of waypoint information is Shanghai (10:00:00) is used for specific description. The unmanned aerial vehicle is to arrive in Shanghai at 10:00:00. Understanding of the 2nd piece of waypoint information and the 3rd piece of waypoint information is similar to understanding of the 1st piece of waypoint information, and details are not described below.

The following uses an example in which a network device (namely, a gNB) in a 5G network is a network device and an unmanned aerial vehicle is user equipment for description. The same is true for a network device such as an eNodeB in a 4G network or another device in a 6G network. This is not limited in this application.

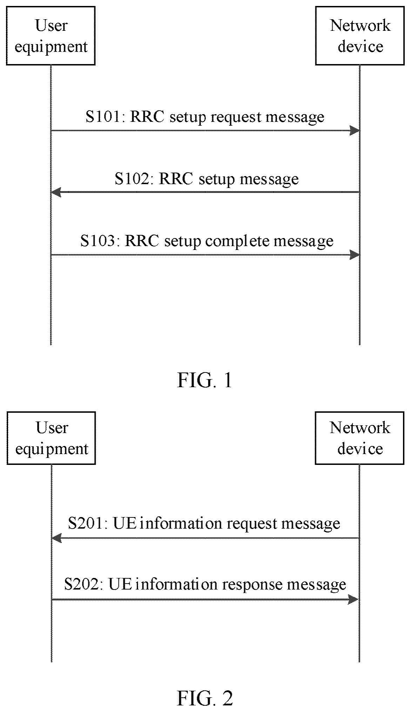

Before the user equipment uploads a flight path to the network device, the user equipment needs to set up a connection to the network device. A scenario in which the user equipment is not connected to the network device is used as an example for description. The user equipment first sets up a radio resource control (radio resource control, RRC) connection to the network device, and then reports the flight path to the network device. A connection setup procedure may be shown in FIG. 1.

S101: The user equipment sends an RRC setup request (radio resource control setup request, RRC Setup Request) message to the network device.

S102: The network device sends an RRC setup (radio resource control setup, RRC Setup) message to the user equipment.

S103: The user equipment sends an RRC setup complete (radio resource control setup complete, RRC Setup Complete) message to the network device.

By performing S101 to S103, a connection is set up between the user equipment and the network device, and the user equipment and the network device can communicate with each other.

To ensure that the user equipment can upload the flight path to the network device, the user equipment needs to send flight path availability indication information (flight path info available) to the network device. The flight path availability indication information indicates that a flight path is available for the user equipment. In this embodiment of this application, the flight path availability indication information may be included in the RRC setup complete message. Alternatively, the user equipment may separately send the flight path availability indication information to the network device after the connection between the user equipment and the network device is set up. That is, the flight path availability indication information is not included in the RRC setup complete message.

When the flight path availability indication information is included in the RRC setup complete message, a quantity of times of communication between the user equipment and the network device can be effectively reduced, to reduce time for the user equipment to report the flight path to the network device.

An example in which the flight path availability indication information is included in the RRC setup complete message is used for description. Embodiments of this application provide a flight path obtaining method, as shown in FIG. 2.

S201: A network device sends a UE information request (UE information request) message to user equipment.

In this embodiment of this application, the UE information request message includes flight path request information (flight path info request), and the flight path request information is used to request the user equipment to report a flight path.

S202: The user equipment sends a UE information response (UE information response) message to the network device.

In this embodiment of this application, the UE information response message includes flight path report information (flight path info report), and the flight path report information includes the flight path.

In some other embodiments, for example, in a scenario in which the user equipment and the network device perform connection resume, the flight path availability indication information may be included in an RRC resume complete (radio resource control resume complete, RRC Resume Complete) message. Alternatively, after a connection between the user equipment and the network device is resumed, the user equipment may separately send the flight path availability indication information to the network device. That is, the flight path availability indication information is not included in the RRC resume complete message. A detailed process of sending the flight path availability indication information in this scenario is not described in the following.

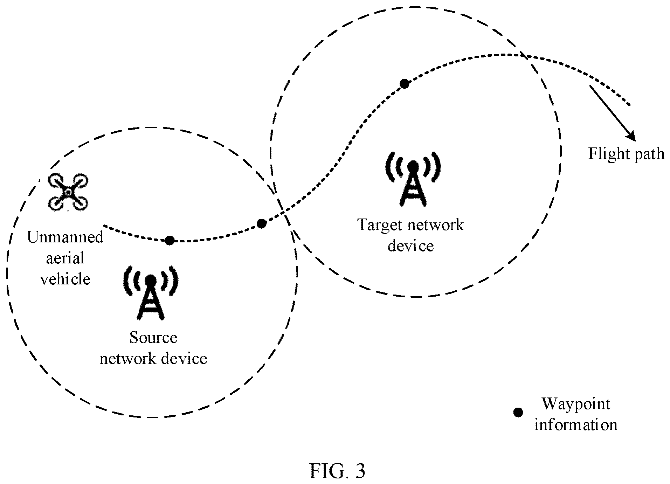

When flying, an unmanned aerial vehicle passes through coverage areas of different network devices. In this case, in the coverage areas of the different network devices, the unmanned aerial vehicle needs to communicate with the different network devices. As shown in FIG. 3, there is one flight path in FIG. 3. The flight path may be determined based on three pieces of waypoint information in FIG. 3. That is, the flight path includes the three pieces of waypoint information. It should be understood that the three pieces of waypoint information may be used to determine a flight path corresponding to a dashed line in FIG. 3, or may be used to determine another flight path. The another determined flight path also includes the foregoing three pieces of waypoint information.

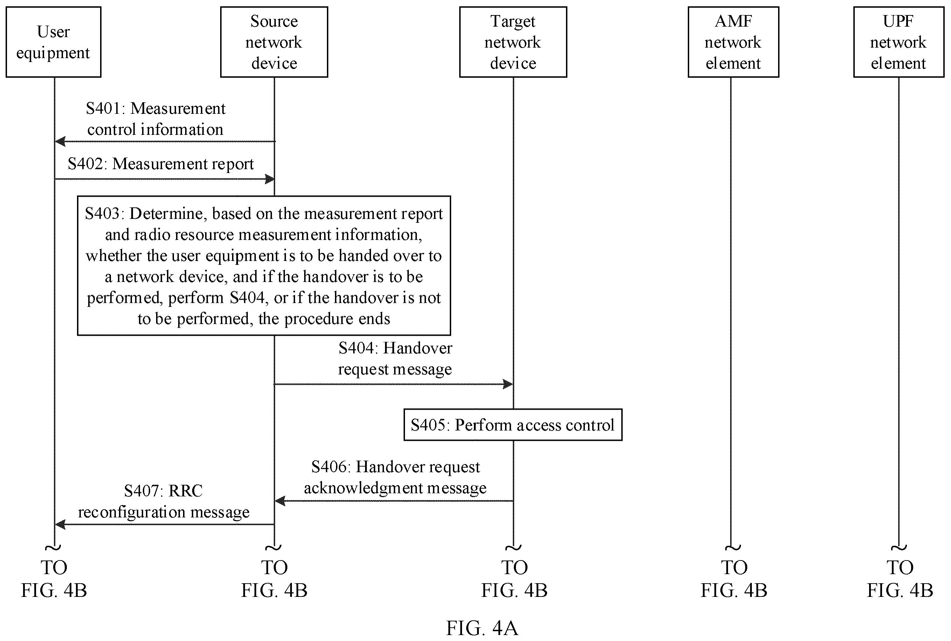

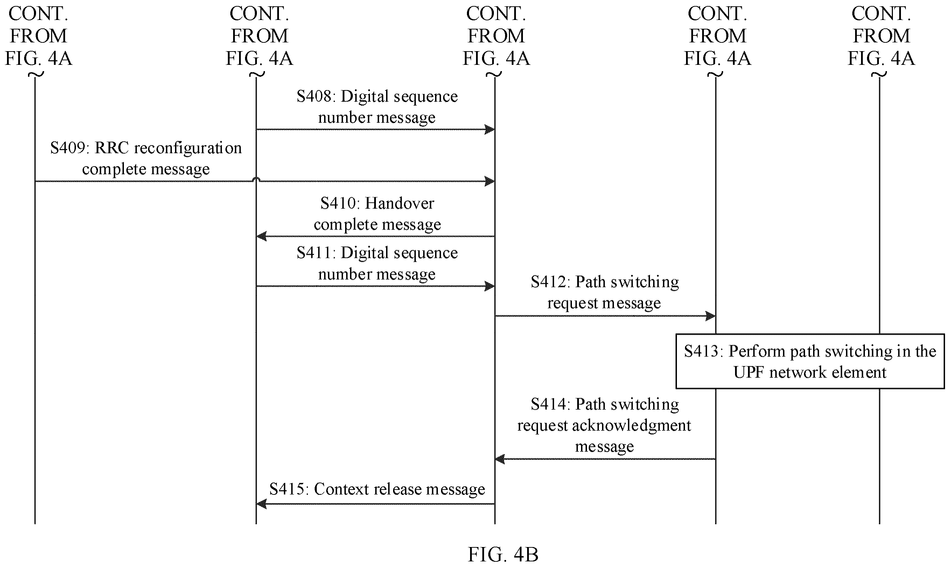

The following uses the flight path corresponding to the dashed line in FIG. 3 as a flight path used in this embodiment of this application for detailed description. The unmanned aerial vehicle currently flies within a coverage area of a source network device. The unmanned aerial vehicle communicates with the source network device, and uploads a flight path of the unmanned aerial vehicle to the source network device. The source network device performs network configuration based on the flight path. In FIG. 3, the coverage area of the source network device is represented by a dashed line area including the source network device. When the unmanned aerial vehicle flies out of the coverage area of the source network device and flies into a coverage area of a target network device, a network device connected to the unmanned aerial vehicle is handed over from the source network device to the target network device, and the unmanned aerial vehicle communicates with the target network device. In FIG. 3, the coverage area of the target network device is represented by a dashed line area including the target network device. Specifically, a network device handover procedure is shown in FIG. 4A and FIG. 4B. A network device handover method is performed by user equipment, a source network device, a target network device, an AMF network element, and a UPF network element through interaction, and may include the following steps.

S401: The source network device sends measurement control information to user equipment.

In this embodiment of this application, the measurement control information is determined by the source network device based on information such as roaming and access restriction.

After receiving the measurement control information, the user equipment generates a measurement report based on the measurement control information.

S402: The user equipment sends the measurement report to the source network device.

S403: The source network device determines, based on the measurement report and radio resource measurement information, whether the user equipment is to be handed over to a network device, and if the handover is to be performed, performs S404, or otherwise, the procedure ends.

S404: The source network device sends a handover request message to the target network device.

In this embodiment of this application, the handover request message includes information such as a target cell identity (identity, ID).

S405: The target network device performs access control.

S406: The target network device sends a handover request acknowledgment message to the source network device.

In this embodiment of this application, the handover request acknowledgment message includes an RRC reconfiguration message that needs to be sent by the target network device to the user equipment.

After receiving the handover request acknowledgment message, the source network device obtains the RRC reconfiguration message from the handover request acknowledgment message.

S407: The source network device sends an RRC reconfiguration (radio resource control reconfiguration, RRC Reconfiguration) message to the user equipment.

In this embodiment of this application, the RRC reconfiguration message further includes information such as the target cell ID.

S408: The source network device sends a digital sequence number message to the target network device.

In this embodiment of this application, the digital sequence number message is used to notify the target network device of a packet data convergence protocol (packet data convergence protocol, PDCP) sequence number.

S409: The user equipment sends an RRC reconfiguration complete (radio resource control reconfiguration complete, RRC Reconfiguration Complete) message to the target network device.

S410: The target network device sends a handover complete message to the source network device.

S411: The source network device sends a digital sequence number message to the target network device.

S412: The target network device sends a path switch request message to the AMF network element.

S413: The AMF network element performs path switching in the UPF network element.

S414: The AMF network element sends a path switch request acknowledgment message to the target network device.

S415: The target network device sends a context release message to the source network device.

In the network device handover scenario described above, if the user equipment has reported flight path availability indication information or a flight path to the source network device before a network device handover, the source network device encapsulates the flight path availability indication information or the flight path into the handover request message, and sends the handover request message to the target network device. The target network device may determine the flight path of the user equipment based on the handover request message after the handover ends. Specifically, if the handover request message includes the flight path availability indication information, the target network device determines the flight path of the user equipment based on the flight path availability indication information; or if the handover request message includes the flight path, the target network device directly obtains the flight path from the handover request message.

In the foregoing procedure, if the user equipment encapsulates the flight path availability indication information in the RRC reconfiguration complete message, and sends the RRC reconfiguration complete message to the target network device, the target network device obtains the flight path availability indication information from the RRC reconfiguration complete message. The target network device determines that the flight path availability indication information or the flight path received from the source network device is not the latest, and therefore discards the flight path availability indication information or the flight path received from the source network device, and instead, obtains the flight path of the user equipment based on the flight path availability indication information in the RRC reconfiguration complete message. Because the target network device can obtain the flight path availability indication information twice, unnecessary communication exists between the user equipment and the second network device, and a large quantity of air interface resources are occupied, causing a waste of air interface resources. In addition, communication between another user equipment and the second network device is also interfered. In addition, because unnecessary communication exists between the user equipment and the second network device, power consumption of the user equipment is also increased.

If the target network device can obtain the flight path of the user equipment only after the handover ends, the target network device cannot obtain the flight path of the user equipment in a timely manner, and cannot perform network configuration based on the flight path of the user equipment. Consequently, the user equipment easily enters a no-fly zone.

There is another problem in the network device handover scenario described above. If the user equipment does not report the flight path to the source network device before the network device handover, the handover request message sent by the source network device to the target network device does not include the flight path. Therefore, the target network device cannot obtain the flight path of the user equipment from the source network device. If the target network device can obtain the flight path of the user equipment only after the handover ends, the target network device cannot obtain the flight path of the user equipment in a timely manner, and cannot perform network configuration based on the flight path of the user equipment. Consequently, the user equipment easily enters a no-fly zone.

With reference to the foregoing descriptions, this application proposes a communication method.

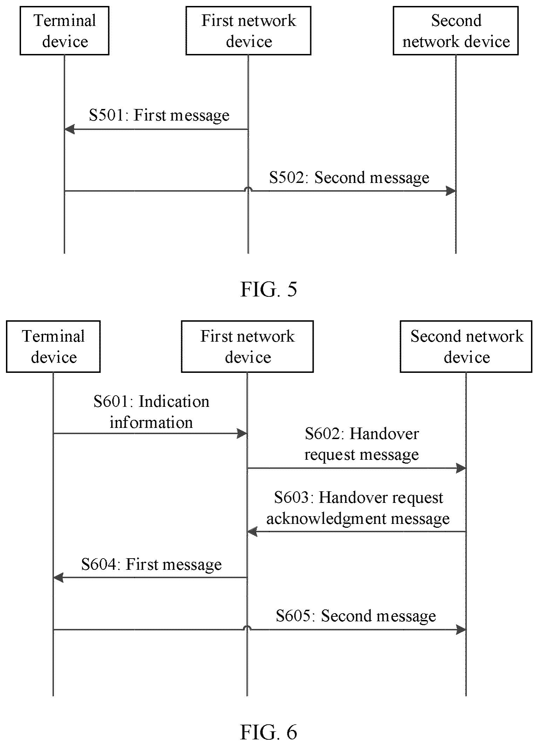

The method provided in this application may be applied to the network handover procedure in FIG. 4A and FIG. 4B. A terminal device may perform steps performed by the user equipment in FIG. 4A and FIG. 4B, a first network device may perform steps performed by the source network device in FIG. 4A and FIG. 4B, and a second network device may perform steps performed by the target network device in FIG. 4A and FIG. 4B. The method may include the following steps shown in FIG. 5.

S501: The first network device sends a first message to the terminal device.

In a possible implementation, the first message indicates handing over the terminal device to the second network device. The first message may be an RRC message. For example, the first message is an RRC reconfiguration message, or the first message may be a transport layer message. This is not limited herein. When this application is applied to the procedure in FIG. 4A and FIG. 4B, the first message may be the RRC reconfiguration message in S407 in FIG. 4A and FIG. 4B.

In this embodiment of this application, before receiving the first message from the first network device, the terminal device may send a third message to the first network device, and after receiving the first message from the first network device, the terminal device may send the third message to the second network device. The following mainly discusses a case in which the terminal device sends the third message to the second network device after receiving the first message.

It should be understood that the third message may be a UE assistance information (UE assistance information, UAI) message, or the third message may be a transport layer message. This is not limited herein.

When the third message is the UAI message, the third message may be used to transmit first assistance information of the terminal device. The first assistance information may include at least one of the following: power information of the terminal device, battery level information of the terminal device, or overheating reminding information of the terminal device.

Optionally, the power information of the terminal device may include current power information of the terminal device and/or rated power information of the terminal device. This is not limited herein. The battery level information of the terminal device may include information about a remaining battery level of the terminal device and/or information about a rated battery level of the terminal device. This is not limited herein.

After the terminal device receives the first message, this embodiment of this application may include the following two possible implementations for determining the third message.

Implementation 1: The terminal device may directly send the third message to the second network device. The third message may include the first assistance information, and the third message does not include indication information, the indication information indicates that a first flight path is available for the terminal device, and the first flight path is a path on which the terminal device is to fly.

Implementation 2: When a fifth condition is satisfied, the terminal device may send the third message to the second network device. The fifth condition includes at least one of the following: a fourth message is sent to the second network device in a first time period, or the terminal device is configured to provide the fourth message.

It should be understood that the fourth message may be a UAI message, or the fourth message may be a transport layer message. This is not limited herein. The third message and the fourth message are messages of a same type. If the third message is a UAI message, the fourth message is also a UAI message.

When the fourth message is a UAI message, the fourth message is used to transmit the first assistance information of the terminal device, and the fourth message may include the first assistance information, or may not include the first assistance information. The fourth message may include or may not include the indication information. This is not limited herein.

In this embodiment of this application, the fourth message may be determined based on first configuration information, and the first configuration information includes a cell group and/or the indication information.

The first time period may be determined based on the first message received by the terminal device from the first network device. For example, an end point of the first time period is a time point at which the terminal device receives the first message, and duration corresponding to the first time period is a first time threshold. For example, the first time threshold is 1s.

In the foregoing method, if the fourth message sent by the terminal device to the second network device in the first time period includes the indication information, the terminal device may send the third message to the second network device, and the third message does not include the indication information. This can avoid a problem that the second network device repeatedly obtains the indication information.

Implementation 3: When the fifth condition is satisfied, the terminal device does not send the third message to the second network device.

In the foregoing method, if the fourth message sent by the terminal device to the second network device in the first time period includes the indication information, the terminal device may not send the third message to the second network device. Regardless of whether the third message includes the indication information, a problem that the second network device repeatedly obtains the indication information can be avoided.

S502: The terminal device sends a second message to the second network device.

In a possible implementation, the second message may be an RRC message. For example, the second message is an RRC reconfiguration complete message, or the second message may be a transport layer message. This is not limited herein. When this application is applied to the procedure in FIG. 4A and FIG. 4B, the second message may be the RRC reconfiguration complete message in S409 in FIG. 4A and FIG. 4B.

This embodiment of this application may include the following two possible implementations for determining the second message.

In a first possible implementation, when a first condition is satisfied, the second message may include the indication information. That the second message may include the indication information may also be expressed as follows: The second message may carry the indication information.

When the second message is the RRC reconfiguration complete message, the RRC reconfiguration complete message may include the indication information, or the RRC reconfiguration complete message may carry the indication information. The indication information indicates that a first flight path is available for the terminal device, and the first flight path is a path on which the terminal device is to fly. It should be understood that, that the indication information indicates that the first flight path is available for the terminal device may also be expressed as follows: The indication information indicates that the terminal device has the first flight path that can be reported.

In this embodiment of this application, after the terminal device receives the first message from the first network device, when the first condition is satisfied, if the second message sent by the terminal device includes the indication information, the third message sent by the terminal device to the second network device does not include the indication information. When the first condition is satisfied, if the second message sent by the terminal device does not include the indication information, the third message sent by the terminal device to the second network device includes the indication information.

In a network device handover procedure, the second network device may further obtain a first configuration file from the first network device, and parse the first configuration file to generate a second configuration file. The first configuration file may include at least one of an RRC configuration and the like, and the second configuration file may also include at least one of an RRC configuration and the like.

The first condition may include the following two possible cases. In a first case, if the second network device cannot successfully parse the first configuration file, the first condition is that the terminal device receives full configuration (full config) information from the second network device. The terminal device obtains the full configuration information from the second network device through the first network device, and the full configuration information is generated by the second network device.

When the first condition is that the terminal device receives the full configuration information from the second network device, regardless of whether the terminal device has sent the indication information or the flight path to the first network device, the second message includes the indication information. When the second message is the RRC reconfiguration complete message, the RRC reconfiguration complete message may include the indication information, or the RRC reconfiguration complete message may carry the indication information.

In a second case, if the second network device can successfully parse the first configuration file, the first condition is that the terminal device does not send the indication information to the first network device. In this embodiment of this application, the terminal device does not send the indication information to the first network device before receiving the first message from the first network device.

It should be understood that, that the terminal device does not send the indication information to the first network device may also be expressed as follows: The terminal device reports no indication information to the first network device, or the terminal device does not send the indication information to the first network device, or the terminal device does not report the indication information to the first network device.

The first condition may further include another case. For example, the first condition may be that the terminal device does not send the first flight path to the first network device. In this embodiment of this application, the terminal device does not send the first flight path to the first network device before receiving the first message from the first network device.

When the first condition is that the terminal device does not send the indication information to the first network device, the indication information may be distinguished for different types of first flight paths.

The first flight path may be of three different types, and details are as follows:

Case 1: The first flight path may be an initial path, and the initial path may also be referred to as a first path. The initial path is a flight path reported by the terminal device for the first time. It should be understood that before a network device receives the flight path reported by the terminal device for the first time, the network device receives no other flight path reported by the terminal device. The network device may be any network device that provides a service for the terminal device.

Correspondingly, when the first flight path is the initial path, the indication information may be flight path availability indication information, and the flight path availability indication information indicates that the initial path is available for the terminal device. When the second message is the RRC reconfiguration complete message and the indication information is the flight path availability indication information, the RRC reconfiguration complete message may include the flight path availability indication information, or the RRC reconfiguration complete message may carry the flight path availability indication information.

Case 2: The first flight path may alternatively be an updated path, and the updated path may also be referred to as a second path. The updated path is a flight path determined by the terminal device after the terminal device reports the initial path, and the initial path is a flight path reported by the terminal device for the first time.

Correspondingly, when the first flight path is the updated path, the indication information may be flight path update availability indication information, and the flight path update availability indication information indicates that the updated path is available for the terminal device. When the second message is the RRC reconfiguration complete message and the indication information is the flight path update availability indication information, the RRC reconfiguration complete message may include the flight path update availability indication information, or the RRC reconfiguration complete message may carry the flight path update availability indication information.

Correspondingly, when the first flight path is the updated path, the indication information may also be flight path availability indication information, and the flight path availability indication information indicates that the updated path is available for the terminal device. When the second message is the RRC reconfiguration complete message and the indication information is the flight path availability indication information, the RRC reconfiguration complete message may include the flight path availability indication information, or the RRC reconfiguration complete message may carry the flight path availability indication information.

Case 3: The first flight path may be an initial path or an updated path. In this case, the indication information may be flight path availability indication information, and the flight path availability indication information indicates that a flight path is available for the terminal device. When the second message is the RRC reconfiguration complete message and the indication information is the flight path availability indication information, the RRC reconfiguration complete message may include the flight path availability indication information, or the RRC reconfiguration complete message may carry the flight path availability indication information.

In this embodiment of this application, when the first condition is satisfied, the second message sent by the terminal device to the second network device includes the indication information, so that it can be effectively ensured that the second network device can obtain a flight path of the terminal device in a timely manner. More importantly, the second network device obtains the indication information once instead of a plurality of times, to avoid a problem such as a waste of air interface resources caused by occupation of a large quantity of air interface resources between the terminal device and the network device. In addition, the foregoing procedure can effectively reduce communication between the terminal device and the network device, to reduce communication interference to another terminal device, and also reduce power consumption of the terminal device.

In an implementation, when the first flight path is the updated path, whether the second message includes the indication information may be further determined based on a second condition. A possible implementation may be as follows:

The terminal device sends the second message to the second network device. When the first condition and the second condition are satisfied, the second message may include the indication information. That the second message may include the indication information may also be expressed as follows: The second message may carry the indication information.

When the second message is the RRC reconfiguration complete message, the RRC reconfiguration complete message may include the indication information, or the RRC reconfiguration complete message may carry the indication information.

Correspondingly, when the first flight path is the updated path, the indication information may be flight path update availability indication information, and the flight path update availability indication information indicates that the updated path is available for the terminal device. When the second message is the RRC reconfiguration complete message and the indication information is the flight path update availability indication information, the RRC reconfiguration complete message may include the flight path update availability indication information, or the RRC reconfiguration complete message may carry the flight path update availability indication information.

Correspondingly, when the first flight path is the updated path, the indication information may be flight path availability indication information, and the flight path availability indication information indicates that the updated path is available for the terminal device. When the second message is the RRC reconfiguration complete message and the indication information is the flight path availability indication information, the RRC reconfiguration complete message may include the flight path availability indication information, or the RRC reconfiguration complete message may carry the flight path availability indication information.

In this embodiment of this application, when the first flight path is the updated path, the second message includes the indication information only when both the first condition and the second condition are satisfied. This can effectively reduce frequency of reporting the indication information, to reduce unnecessary communication between the terminal device and the network device, and effectively avoid a problem such as a waste of air interface resources.

The second condition may be configured in the following two manners. In a first manner, a configuration manner of the second condition may be configuring by the first network device, which may also be understood as: the second condition is configured by the first network device. In a second manner, a configuration manner of the second condition may be configuring by the second network device, which may also be understood as: the second condition is configured by the second network device.

If the second condition is configured by the first network device, the second condition is configured by the first network device and sent to the terminal device before the terminal device receives the first message from the first network device.

If the second condition is configured by the second network device, the second condition is configured by the second network device and sent to the terminal device after the terminal device receives the first message from the first network device.

It should be understood that the second condition may be stored in the terminal device, or may be stored in another device that can be accessed by the terminal device. This is not limited herein.

The following further describes the configuration manner of the second condition by using an example in which the second condition is stored in the terminal device. The configuration manner may include the following possible implementations:

After the second network device obtains the first configuration file from the first network device, if the second network device can successfully parse the first configuration file, the second network device may obtain the second condition in the first configuration file. The second network device determines, based on a third condition, whether to update the second condition in the first configuration file. If the second network device updates the second condition in the first configuration file, the second network device may send an updated second condition to the terminal device. Therefore, the second condition stored in the terminal device is configured by the second network device. If the second network device does not update the second condition in the first configuration file, the second network device may not send the second condition to the terminal device. Therefore, the second condition stored in the terminal device is still configured by the first network device. The third condition may be stored in the second network device, or may be stored in another device that can be accessed by the second network device. This is not limited herein. The third condition may be at least one of location precision, a load status, and the like. This is not limited herein.

After the second network device obtains the first configuration file from the first network device, if the second network device cannot successfully parse the first configuration file, the second network device cannot obtain the second condition in the first configuration file, or the second condition in the first configuration file obtained by the second network device is unavailable. In the foregoing case, the second network device may send, to the terminal device, the second condition stored in the second network device. Therefore, the second condition stored in the terminal device is configured by the second network device. Alternatively, the second network device may not send the second condition stored in the second network device to the terminal device. Therefore, the second condition stored in the terminal device is still configured by the first network device.

It should be understood that, in a network device handover procedure, if the second network device does not send the second condition to the terminal device, the second condition is still configured by the first network device. In this case, the terminal device may use the second condition, or may ignore the second condition.

In a possible implementation, the second condition may include: a change range between the first flight path and a second flight path is in a preset range. In this embodiment of this application, a relationship between the first flight path and the second flight path may be as follows: The first flight path is a flight path obtained by updating the second flight path, or the second flight path is any path generated before the first flight path, or the second flight path is another preset path, or the second flight path is a path obtained from another network device. This is not limited herein. The second condition may also be referred to as an update condition.

Optionally, that the change range between the first flight path and the second flight path is in the preset range may include the following possible implementations:

Implementation 1: A difference between a quantity of waypoints included in the first flight path and a quantity of waypoints included in the second flight path is in a first preset range.

In a possible implementation, when the terminal device determines the second flight path and has not yet flown according to the second flight path, the terminal device determines the first flight path. In this case, the quantity of waypoints included in the first flight path may be a total quantity of waypoints included in the first flight path, the quantity of waypoints included in the second flight path may be a total quantity of waypoints included in the second flight path, and the first preset range may be a range greater than a first threshold. Therefore, the second condition may be that a difference between the total quantity of waypoints included in the first flight path and the total quantity of waypoints included in the second flight path is greater than the first threshold.

In a possible implementation, when the terminal device determines the second flight path and the terminal device has flown according to the second flight path, the terminal device determines the first flight path. In this case, the quantity of waypoints included in the first flight path may be a total quantity of waypoints included in the first flight path, the quantity of waypoints included in the second flight path may be a total quantity of waypoints included in the second flight path, and the first preset range may be a range greater than a first threshold. Therefore, the second condition may be that a difference between the total quantity of waypoints included in the first flight path and the total quantity of waypoints included in the second flight path is greater than the first threshold.

Alternatively, the quantity of waypoints included in the first flight path may be a total quantity of waypoints included in the first flight path, the quantity of waypoints included in the second flight path may be a quantity of unflown waypoints included in the second flight path, and the first preset range may be a range greater than a second threshold. Therefore, the second condition may be that a difference between the total quantity of waypoints included in the first flight path and the quantity of unflown waypoints included in the second flight path is greater than the second threshold.

Implementation 2: A location deviation between the first flight path and the second flight path is in a second preset range.

In a possible implementation, the location deviation between the first flight path and the second flight path may be a location deviation between location information in first waypoint information in the first flight path and location information in first waypoint information in the second flight path, and the second preset range may be a range greater than a third threshold. Therefore, the second condition may be that the location deviation between the location information in the first waypoint information in the first flight path and the location information in the first waypoint information in the second flight path is greater than the third threshold.

It should be understood that the first waypoint information in the first flight path may be any waypoint information in the first flight path, and a number in the first waypoint information in the first flight path is the same as a number in the first waypoint information in the second flight path. For example, if the first waypoint information in the first flight path is information corresponding to the 1st waypoint in the first flight path, the first waypoint information in the second flight path is information corresponding to the 1st waypoint in the second flight path.

The location deviation may be a distance between a first waypoint in the first flight path and a first waypoint in the second flight path, and the distance between the first waypoint in the first flight path and the first waypoint in the second flight path may be directly determined based on the location information in the first waypoint information in the first flight path and the location information in the first waypoint information in the second flight path. For example, when location information in waypoint information is represented by rectangular coordinates, if the location information in the first waypoint information in the first flight path is (20, 20), and the location information in the first waypoint information in the second flight path is (30, 20), the location deviation between the location information in the first waypoint information in the first flight path and the location information in the first waypoint information in the second flight path is

$$\sqrt{(20-30)^2 + (20-20)^2} = 10.$$

Implementation 3: An arrival time deviation between the first flight path and the second flight path is in a third preset range.

In a possible implementation, the arrival time deviation between the first flight path and the second flight path may be a time deviation between a time point in the first waypoint information in the first flight path and a time point in the first waypoint information in the second flight path, and the third preset range may be a range greater than a fourth threshold. Therefore, the second condition may be that a time deviation between a time point in the first waypoint information in the first flight path and a time point in the first waypoint information in the second flight path is greater than the fourth threshold.

It should be understood that the first waypoint information in the first flight path may be any waypoint information in the first flight path, and a number in the first waypoint information in the first flight path is the same as a number in the first waypoint information in the second flight path. For example, if the first waypoint information in the first flight path is information corresponding to the 1st waypoint in the first flight path, the first waypoint information in the second flight path is information corresponding to the 1st waypoint in the second flight path.

The time deviation may be a difference between the time point in the first waypoint information in the first flight path and the time point in the first waypoint information in the second flight path. For example, if the time point in the first waypoint information in the first flight path is 01:00:00, and the time point in the first waypoint information in the second flight path is 02:00:00, the time deviation between the time point in the first waypoint information in the first flight path and the time point in the first waypoint information in the second flight path is 1 hour.

Implementation 4: A ratio between the quantity of waypoints included in the first flight path and the quantity of waypoints included in the second flight path is in a fourth preset range.

In a possible implementation, when the terminal device determines the second flight path and has not yet flown according to the second flight path, the terminal device determines the first flight path. In this case, the quantity of waypoints included in the first flight path may be a total quantity of waypoints included in the first flight path, the quantity of waypoints included in the second flight path may be a total quantity of waypoints included in the second flight path, and the fourth preset range may be a range greater than a fifth threshold. Therefore, the second condition may be that a ratio between the total quantity of waypoints included in the first flight path and the total quantity of waypoints included in the second flight path is greater than the fifth threshold.

In a possible implementation, when the terminal device determines the second flight path and the terminal device has flown according to the second flight path, the terminal device determines the first flight path. In this case, the quantity of waypoints included in the first flight path may be a total quantity of waypoints included in the first flight path, the quantity of waypoints included in the second flight path may be a total quantity of waypoints included in the second flight path, and the fourth preset range may be a range greater than the fifth threshold. Therefore, the second condition may be that a ratio between the total quantity of waypoints included in the first flight path and the total quantity of waypoints included in the second flight path is greater than the fifth threshold.

Alternatively, the quantity of waypoints included in the first flight path may be a total quantity of waypoints included in the first flight path, the quantity of waypoints included in the second flight path may be a quantity of unflown waypoints included in the second flight path, and the fourth preset range may be a range greater than a sixth threshold. Therefore, the second condition may be that a ratio between the total quantity of waypoints included in the first flight path and the quantity of unflown waypoints included in the second flight path is greater than the sixth threshold.

Implementation 5: Changed waypoint information in the first flight path relative to the second flight path satisfies a fifth preset range.

In a possible implementation, the changed waypoint information in the first flight path may be a number of the changed waypoint information in the first flight path, and the fifth preset range may be at least one preset number. Therefore, the second condition may be that the number of the changed waypoint information in the first flight path is in the at least one preset number.

For example, the at least one preset number includes 2 and 4. If the number of the changed waypoint information in the first flight path is 2, the number of the changed waypoint information in the first flight path is in the at least one preset number.

In a possible implementation, the changed waypoint information in the first flight path may be location information in the changed waypoint information in the first flight path, and the fifth preset range may be a radiation range of a network device. Therefore, the second condition may be that the location information in the changed waypoint information in the first flight path is in the radiation range of the network device.

In a possible implementation, the changed waypoint information in the first flight path may be a quantity of changed time points in the first flight path, and the fifth preset range may be a range greater than a seventh threshold. Therefore, the second condition may be that the quantity of changed time points in the first flight path is greater than the seventh threshold.

Alternatively, the changed waypoint information in the first flight path may be a ratio of a quantity of changed time points in the first flight path to a total quantity of time points in the first flight path, and the fifth preset range may be a range greater than an eighth threshold. Therefore, the second condition may be that the ratio of the quantity of changed time points in the first flight path to the total quantity of time points in the first flight path is greater than the eighth threshold.

In a possible implementation, the changed waypoint information in the first flight path may be a number of waypoint information corresponding to a changed time point in the first flight path, and the fifth preset range may be at least one preset number. Therefore, the second condition may be that the number of the waypoint information corresponding to the changed time point in the first flight path is in the at least one preset number.

For example, the at least one preset number includes 2. If the number of the waypoint information corresponding to the changed time point in the first flight path is 2, the number of the waypoint information corresponding to the changed time point in the first flight path is in the at least one preset number.

In a possible implementation, the changed waypoint information in the first flight path may be a changed time point in the first flight path, and the fifth preset range may be a preset time period. The preset time period may be a high-load time period or a low-load time period. The preset time period may be alternatively determined in another manner. This is not limited herein. Therefore, the second condition may be that the change time point in the first flight path is in the preset time period.

This embodiment of this application provides a plurality of solutions for efficiently determining the second condition.

In a second possible implementation, when the first condition is not satisfied, the second message does not include the indication information. That the second message does not include the indication information may also be expressed as follows: The second message does not carry the indication information, or the second message excludes the indication information.

When the second message is the RRC reconfiguration complete message, the RRC reconfiguration complete message does not include the indication information, or the RRC reconfiguration complete message does not carry the indication information, or the RRC reconfiguration complete message excludes the indication information. The indication information indicates that a first flight path is available for the terminal device, and the first flight path is a path on which the terminal device is to fly. It should be understood that, that the indication information indicates that the first flight path is available for the terminal device may also be expressed as follows: The indication information indicates that the terminal device has the first flight path that can be reported.

Optionally, the foregoing case in which the first condition is not satisfied may be understood as follows: The terminal device has sent the indication information to the first network device before receiving the first message from the first network device, or the terminal device has sent a flight path to the first network device before receiving the first message from the first network device.

The indication information is distinguished for different types of first flight paths in the following.

The first flight path may be of three different types, and details are as follows:

Case 1: The first flight path may be an initial path, and the initial path may also be referred to as a first path. The initial path is a flight path reported by the terminal device for the first time. It should be understood that before a network device receives the flight path reported by the terminal device for the first time, the network device receives no other flight path reported by the terminal device. The network device may be any network device that provides a service for the terminal device.

Correspondingly, when the first flight path is the initial path, the indication information may be flight path availability indication information, and the flight path availability indication information indicates that the initial path is available for the terminal device. When the second message is the RRC reconfiguration complete message and the indication information is the flight path availability indication information, the RRC reconfiguration complete message does not include the flight path availability indication information, or the RRC reconfiguration complete message does not carry the flight path availability indication information, or the RRC reconfiguration complete message excludes the flight path availability indication information.

Case 2: The first flight path may alternatively be an updated path, and the updated path may also be referred to as a second path. The updated path is a flight path determined by the terminal device after the terminal device reports the initial path, and the initial path is a flight path reported by the terminal device for the first time.

Correspondingly, when the first flight path is the updated path, the indication information may be flight path update availability indication information, and the flight path update availability indication information indicates that the updated path is available for the terminal device. When the second message is the RRC reconfiguration complete message and the indication information is the flight path update availability indication information, the RRC reconfiguration complete message does not include the flight path update availability indication information, or the RRC reconfiguration complete message does not carry the flight path update availability indication information, or the RRC reconfiguration complete message excludes the flight path update availability indication information.

Correspondingly, when the first flight path is the updated path, the indication information may also be flight path availability indication information, and the flight path availability indication information indicates that the updated path is available for the terminal device. When the second message is the RRC reconfiguration complete message and the indication information is the flight path availability indication information, the RRC reconfiguration complete message does not include the flight path availability indication information, or the RRC reconfiguration complete message does not carry the flight path availability indication information, or the RRC reconfiguration complete message excludes the flight path availability indication information.

Case 3: The first flight path may be an initial path or an updated path. In this case, the indication information may be flight path availability indication information, and the flight path availability indication information indicates that a flight path is available for the terminal device. When the second message is the RRC reconfiguration complete message and the indication information is the flight path availability indication information, the RRC reconfiguration complete message does not include the flight path availability indication information, or the RRC reconfiguration complete message does not carry the flight path availability indication information, or the RRC reconfiguration complete message excludes the flight path availability indication information.

It can be learned from the foregoing embodiment that, before a network device handover, the terminal device has reported the indication information or a flight path to the first network device, and the first network device encapsulates the indication information or the flight path into a handover request message, and sends the handover request message to the second network device. The indication information is excluded from the second message sent by the terminal device to the second network device, so that it can be effectively ensured that the second network device obtains the indication information only once, and obtains the flight path based on the indication information. This can prevent the target network device from obtaining the indication information twice in the conventional technology, to avoid a problem such as a waste of air interface resources caused by occupation of a large quantity of air interface resources between the terminal device and the network device. In addition, because communication between the terminal device and the network device can be reduced, communication interference to another terminal device can be reduced, and power consumption of the terminal device can be reduced.

In another case, before the network device handover, the terminal device does not report the flight path to the first network device, and the second message sent by the terminal device to the second network device includes the indication information. This can effectively ensure that the second network device obtains the flight path of the terminal device in a timely manner.

With reference to the foregoing descriptions, this application proposes another communication method. The method provided in this application may be applied to the handover procedure in FIG. 4A and FIG. 4B. A terminal device may perform steps performed by the user equipment in FIG. 4A and FIG. 4B, a first network device may perform steps performed by the source network device in FIG. 4A and FIG. 4B, and a second network device may perform steps performed by the target network device in FIG. 4A and FIG. 4B. The method may include the following steps shown in FIG. 6.

S601: The terminal device sends indication information to the first network device.

In a possible implementation, the indication information indicates that a first flight path is available for the terminal device. When this application is applied to the procedure in FIG. 4A and FIG. 4B, S601 should be performed before S401 in FIG. 4A and FIG. 4B.

The first flight path may be in three cases, and details are as follows:

Case 1: The first flight path may be an initial path, and the initial path may also be referred to as a first path. The initial path is a flight path reported by the terminal device for the first time. It should be understood that before a network device receives the flight path reported by the terminal device for the first time, the network device receives no other flight path reported by the terminal device. The network device may be any network device that provides a service for the terminal device.

Correspondingly, when the first flight path is the initial path, the indication information may be flight path availability indication information, and the flight path availability indication information indicates that the initial path is available for the terminal device.

Case 2: The first flight path may alternatively be an updated path, and the updated path may also be referred to as a second path. The updated path is a flight path determined by the terminal device after the terminal device reports the initial path, and the initial path is a flight path reported by the terminal device for the first time.

Correspondingly, when the first flight path is the updated path, the indication information may be flight path update availability indication information, and the flight path update availability indication information indicates that the updated path is available for the terminal device.

Case 3: The first flight path may be an initial path or an updated path. In this case, the indication information may be flight path availability indication information, and the flight path availability indication information indicates that a flight path is available for the terminal device.

S602: The first network device sends a handover request message to the second network device.

When this application is applied to the procedure in FIG. 4A and FIG. 4B, S602 may be S404 in FIG. 4A and FIG. 4B. The handover request message includes the indication information.

When the first flight path is an initial path, the handover request message includes the flight path availability indication information.

When the first flight path is an updated path, the handover request message includes flight path update availability indication information.

When the first flight path may be an initial path or an updated path, the handover request message includes flight path availability indication information.

S603: The second network device sends a handover request acknowledgment message to the first network device.

When this application is applied to the procedure in FIG. 4A and FIG. 4B, S603 may be S406 in FIG. 4A and FIG. 4B. The handover request acknowledgment message includes a first message, and the first message may be the RRC reconfiguration message in S406 in FIG. 4A and FIG. 4B.

S604: The first network device sends the first message to the terminal device.

In a possible implementation, the first message indicates handing over the terminal device to the second network device. The first message may be an RRC message. For example, the first message is an RRC reconfiguration message, or the first message may be a transport layer message. This is not limited herein. When this application is applied to the procedure in FIG. 4A and FIG. 4B, the first message may be the RRC reconfiguration message in S407 in FIG. 4A and FIG. 4B.

In a possible implementation, the first message includes request information and/or a second condition, the request information indicates the terminal device to report a flight path to the second network device, and the second condition is a trigger condition for the terminal device to report a flight path. The request information may be the flight path request information in S201 in FIG. 2.

When the first message is the RRC reconfiguration message and the request information is the flight path request information, the RRC reconfiguration message includes the flight path request information and/or the second condition, or the RRC reconfiguration message carries the flight path request information and/or the second condition.

The second condition may be configured in the following two manners. In a first manner, a configuration manner of the second condition may be configuring by the first network device, which may also be understood as: the second condition is configured by the first network device. In a second manner, a configuration manner of the second condition may be configuring by the second network device, which may also be understood as: the second condition is configured by the second network device.

If the second condition is configured by the first network device, the second condition is configured by the first network device and sent to the terminal device before the terminal device receives the first message from the first network device. If the second condition is configured by the second network device, the second condition is configured by the second network device and sent to the terminal device after the terminal device receives the first message from the first network device. It should be understood that the second condition may be stored in the terminal device, or may be stored in another device that can be accessed by the terminal device. This is not limited herein.

The following further describes the configuration manner of the second condition by using an example in which the second condition is stored in the terminal device. The configuration manner may include the following possible implementations:

After the second network device obtains a first configuration file from the first network device, if the second network device can successfully parse the first configuration file, the second network device may obtain the second condition in the first configuration file. The second network device determines, based on a third condition, whether to update the second condition in the first configuration file. If the second network device updates the second condition in the first configuration file, the second network device may send an updated second condition to the terminal device. Therefore, the second condition stored in the terminal device is configured by the second network device. If the second network device does not update the second condition in the first configuration file, the second network device may not send the second condition to the terminal device. Therefore, the second condition stored in the terminal device is still configured by the first network device. The third condition may be stored in the second network device, or may be stored in another device that can be accessed by the second network device. This is not limited herein. The third condition may be at least one of location precision, a load status, and the like. This is not limited herein.

After the second network device obtains the first configuration file from the first network device, if the second network device cannot successfully parse the first configuration file, the second network device cannot obtain the second condition in the first configuration file, or the second condition in the first configuration file obtained by the second network device is unavailable. In the foregoing case, the second network device may send, to the terminal device, the second condition stored in the second network device. Therefore, the second condition stored in the terminal device is configured by the second network device. Alternatively, the second network device may not send the second condition stored in the second network device to the terminal device. Therefore, the second condition stored in the terminal device is still configured by the first network device.

In a possible implementation, the second condition may include: a change range between the first flight path and a second flight path is in a preset range. In this embodiment of this application, a relationship between the first flight path and the second flight path may be as follows: The first flight path is a flight path obtained by updating the second flight path, or the second flight path is any path generated before the first flight path, or the second flight path is another preset path, or the second flight path is a path obtained from another network device. This is not limited herein. The second condition may also be referred to as an update condition.

Optionally, that the change range between the first flight path and the second flight path is in the preset range may include the following possible implementations:

Implementation 1: A difference between a quantity of waypoints included in the first flight path and a quantity of waypoints included in the second flight path is in a first preset range.

Implementation 2: A location deviation between the first flight path and the second flight path is in a second preset range.

Implementation 3: An arrival time deviation between the first flight path and the second flight path is in a third preset range.

Implementation 4: A ratio between the quantity of waypoints included in the first flight path and the quantity of waypoints included in the second flight path is in a fourth preset range.

Implementation 5: Changed waypoint information in the first flight path relative to the second flight path satisfies a fifth preset range.

For three cases of the first flight path, the terminal device may determine a second message in the following possible implementations.

In a first case, when the first flight path is an initial path, after receiving the first message sent by the first network device, the terminal device may determine the second message in the following implementations:

Implementation 1: When the first message includes request information, the terminal device determines the first flight path based on the request information, and adds the first flight path to the second message.

Implementation 2: When the first message includes the request information and the second condition, the terminal device determines the first flight path based on the request information, and adds the first flight path to the second message.

In a second case, when the first flight path is an updated path, after receiving the first message sent by the first network device, the terminal device may determine the second message in the following implementations:

Implementation 1: When the first message includes request information, the terminal device determines the first flight path based on the request information, and adds the first flight path to the second message.

Implementation 2: When the first message includes the second condition, the terminal device determines whether the first flight path satisfies the second condition, and when the first flight path satisfies the second condition, the terminal device adds the first flight path to the second message.

Implementation 3: When the first message includes the request information and the second condition, the terminal device determines the first flight path based on the request information and determines whether the first flight path satisfies the second condition, and when the first flight path satisfies the second condition, the terminal device adds the first flight path to the second message.

Implementation 4: When the first message includes the request information and the second condition, the terminal device determines the first flight path based on the request information, and the terminal device adds the first flight path to the second message regardless of whether the first flight path satisfies the second condition.

In a third case, when the first flight path may be an initial path or an updated path, after receiving the first message sent by the first network device, the terminal device may determine the second message in the following implementations:

Implementation 1: When the first message includes request information, the terminal device determines the first flight path based on the request information, and adds the first flight path to the second message.

Implementation 2: When the first message includes the second condition, if the first flight path is an updated path, the terminal device determines whether the first flight path satisfies the second condition, and when the first flight path satisfies the second condition, the terminal device adds the first flight path to the second message.

Implementation 3: When the first message includes the request information and the second condition, if the first flight path is an updated path, the terminal device determines the first flight path based on the request information and determines whether the first flight path satisfies the second condition, and when the first flight path satisfies the second condition, the terminal device adds the first flight path to the second message.

Implementation 4: When the first message includes the request information and the second condition, if the first flight path is an updated path, the terminal device determines the first flight path based on the request information, and the terminal device adds the first flight path to the second message regardless of whether the first flight path satisfies the second condition.

In a possible implementation, when the first message received by the terminal device includes the request information, the terminal device may ignore a first condition.

S605: The terminal device sends the second message to the second network device.

In a possible implementation, the second message may be an RRC message. For example, the second message is an RRC reconfiguration complete message, or the second message may be a transport layer message. This is not limited herein. When this application is applied to the procedure in FIG. 4A and FIG. 4B, the second message may be the RRC reconfiguration complete message in S409 in FIG. 4A and FIG. 4B.

The second message may include the first flight path. When the second message is the RRC reconfiguration complete message, the RRC reconfiguration complete message may include the first flight path, or the RRC reconfiguration complete message may carry the first flight path. The first flight path is a path on which the terminal device is to fly.

Optionally, when the second message includes the first flight path, the second message does not include the indication information.

When the second message is the RRC reconfiguration complete message and the indication information is the flight path availability indication information, if the RRC reconfiguration complete message includes the first flight path, the RRC reconfiguration complete message does not include the flight path availability indication information, or the RRC reconfiguration complete message does not carry the flight path availability indication information, or the RRC reconfiguration complete message excludes the flight path availability indication information.

When the second message is the RRC reconfiguration complete message and the indication information is the flight path update availability indication information, if the RRC reconfiguration complete message includes the first flight path, the RRC reconfiguration complete message does not include the flight path update availability indication information, or the RRC reconfiguration complete message does not carry the flight path update availability indication information, or the RRC reconfiguration complete message excludes the flight path update availability indication information.

In this embodiment of this application, after receiving the indication information, the second network device sends, to the first network device, the first message that includes the request information and/or the second condition. The terminal device sends the first flight path to the second network device based on the first message. It can be learned that the second network device can obtain the first flight path in a network device handover procedure, instead of obtaining the first flight path only after the network device handover completes. This can effectively ensure that the second network device obtains a flight path in a timely manner and performs network configuration based on the flight path.

For the embodiment shown in FIG. 6, this application proposes a third communication method. When the first flight path is the second path or the updated path, the indication information sent by the terminal device to the first network device in S601 includes at least one piece of changed waypoint information in the first flight path.

In S602, the second network device receives the handover request message from the first network device. The handover request message includes the indication information.

The second network device obtains the indication information from the handover request message, and obtains the at least one piece of changed waypoint information in the first flight path from the indication information. The second network device determines whether the at least one piece of changed waypoint information in the first flight path satisfies a fourth condition.

If the fourth condition is satisfied, S603 in which the second network device sends the handover request acknowledgment message to the first network device is performed. The handover request acknowledgment message includes the first message. S604 in which the first network device sends the first message to the terminal device is performed. The first message may include the request information and/or the second condition. S605 in which the terminal device sends the second message to the second network device is performed. The second message may include the first flight path.

If the fourth condition is not satisfied, S603 in which the second network device sends the handover request acknowledgment message to the first network device is performed. The handover request acknowledgment message includes the first message. S604 in which the first network device sends the first message to the terminal device is performed. The first message does not include the request information and/or the second condition. S605 in which the terminal device sends the second message to the second network device is performed. The second message does not include the first flight path.

It should be understood that the fourth condition may include a preset number. For example, if a number corresponding to the at least one piece of changed waypoint information in the first flight path is the preset number, the fourth condition is satisfied; or if a number corresponding to the at least one piece of changed waypoint information in the first flight path is not the preset number, the fourth condition is not satisfied. Alternatively, the fourth condition may be a rule determined in another manner. This is not limited herein. The fourth condition may be stored in the second network device, or may be stored in another device that can be accessed by the second network device. This is not limited herein.

For the third communication method proposed in the application, in a process of performing the third communication method, the terminal device may store the second condition, or may not store the second condition. When the terminal device stores the second condition, the terminal device may not determine whether the first flight path satisfies the second condition.

In this embodiment of this application, the second network device determines, based on the at least one piece of changed waypoint information in the first flight path in the indication information, whether to upload the flight path, so that the terminal device does not determine whether to upload the flight path, to reduce power consumption of the terminal device. In addition, generally, a computing capability of the terminal device is far lower than that of a network device. The second network device determines whether to upload the flight path, so that communication efficiency can be further improved.

In the foregoing embodiments provided in this application, the method provided in embodiments of this application is described from a perspective of interaction between devices. To implement the functions in the foregoing methods provided in the foregoing embodiments of this application, the terminal device, the first network device, or the second network device may include a hardware structure and/or a software module, to implement the foregoing functions by using the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

In this embodiment of this application, division into the modules is an example, and is merely a logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

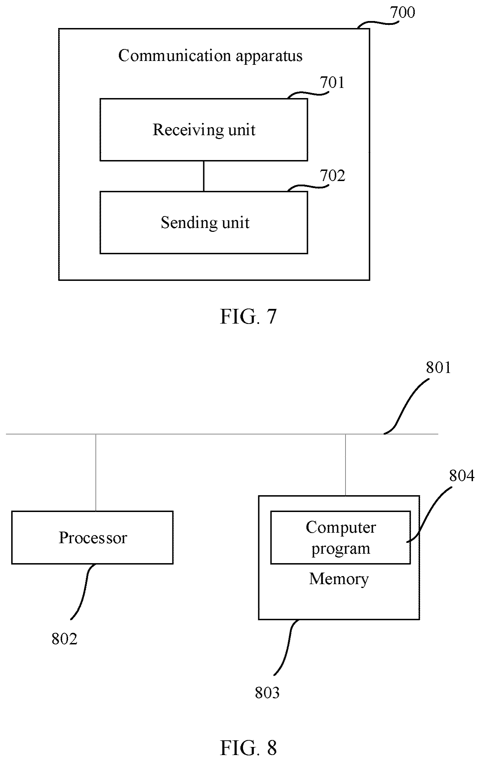

Same as the foregoing concept, as shown in FIG. 7, an embodiment of this application further provides a communication apparatus 700, configured to implement the functions of the terminal device, the first network device, or the second network device in the foregoing methods. For example, the communication apparatus may be a software module or a chip system. In this embodiment of this application, the chip system may include a chip, or may include a chip and another discrete device. The communication apparatus 700 may include a receiving unit 701 and a sending unit 702.

In this embodiment of this application, the sending unit and the receiving unit included in the communication apparatus 700 are respectively configured to perform sending and receiving steps of the terminal device, the first network device, or the second network device in the foregoing method embodiments. The sending unit and the receiving unit may be one unit integrated together, or may be two independent units.

The following describes in detail communication apparatuses provided in embodiments of this application with reference to FIG. 7 and FIG. 8. It should be understood that descriptions of apparatus embodiments correspond to the descriptions of the method embodiments. Therefore, for content that is not described in detail, refer to the method embodiments. For brevity, details are not described herein again.

In an implementation, the communication apparatus 700 may perform the following functions:
The receiving unit 701 is configured to receive a first message from a first network device, where the first message indicates handing over a terminal device to a second network device.

The sending unit 702 is configured to send a second message to the second network device, where the second message includes indication information when a first condition is satisfied, the indication information indicates that a first flight path is available for the terminal device, and the first flight path is a path on which the terminal device is to fly.

The communication apparatus may further include another unit, for example, a processing unit. The processing unit may be configured to perform processing such as parsing the first message. The processing unit may be further configured to perform a function such as generating the second message. This is not limited in this application.

In a possible design, the first condition is that the terminal device does not send the indication information to the first network device.

In a possible design, the sending unit 702 is specifically configured to: before receiving the first message from the first network device, skip sending the indication information to the first network device.

In a possible design, the sending unit 702 is specifically configured to: when the first condition and a second condition are satisfied, the second message includes the indication information, the second condition includes: a change range between the first flight path and a second flight path is in a preset range, and the first flight path is a flight path obtained by updating the second flight path.

In a possible design, that the change range between the first flight path and the second flight path is in the preset range may include: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range.

In a possible design, a configuration manner of the second condition includes a manner of configuring by the first network device or a manner of configuring by the second network device.

In a possible design, the first message is a radio resource control RRC reconfiguration message, and the second message is an RRC reconfiguration complete message.

In an implementation, the communication apparatus 700 may perform the following functions:
The sending unit 702 is configured to send a first message to a first network device, where the first message indicates handing over a terminal device to a second network device.

The receiving unit 701 is configured to receive a second message from the terminal device, where the second message includes indication information when a first condition is satisfied, the indication information indicates that a first flight path is available for the terminal device, and the first flight path is a path on which the terminal device is to fly.

The communication apparatus may further include another unit, for example, a processing unit. The processing unit may be configured to perform a function such as generating the first message. The processing unit may be further configured to perform processing such as parsing the second message. This is not limited in this application.

In a possible design, the first condition is that the terminal device does not send the indication information to the first network device.

In a possible design, the receiving unit 701 is specifically configured to: when the first condition and a second condition are satisfied, the second message includes the indication information, the second condition includes: a change range between the first flight path and a second flight path is in a preset range, and the first flight path is a flight path obtained by updating the second flight path.

In a possible design, that the change range between the first flight path and the second flight path is in the preset range includes: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range.

In a possible design, a configuration manner of the second condition includes a manner of configuring by the first network device or a manner of configuring by the second network device.

In a possible design, the first message is a radio resource control RRC reconfiguration message, and the second message is an RRC reconfiguration complete message.

In an implementation, the communication apparatus 700 may perform the following functions:
The sending unit 702 is configured to send indication information to a first network device, where the indication information indicates that a first flight path is available for a terminal device.

The receiving unit 701 is configured to receive a first message from the first network device, where the first message indicates handing over the terminal device to a second network device, the first message includes request information and/or a second condition, the request information indicates the terminal device to report a flight path to the second network device, and the second condition is a trigger condition for the terminal device to report a flight path.

The sending unit 702 is further configured to send a second message to the second network device, where the second message includes the first flight path, and the first flight path is a path on which the terminal device is to fly.

The communication apparatus may further include another unit, for example, a processing unit. The processing unit may be configured to perform processing such as parsing the first message. The processing unit may be further configured to perform a function such as generating the second message. This is not limited in this application.

In a possible design, the second condition includes: a change range between the first flight path and a second flight path is in a preset range, and the first flight path is a flight path obtained by updating the second flight path.

In a possible design, that the change range between the first flight path and the second flight path is in the preset range includes: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range.

In a possible design, a configuration manner of the second condition includes a manner of configuring by the first network device or a manner of configuring by the second network device.

In a possible design, the first message is a radio resource control RRC reconfiguration message, and the second message is an RRC reconfiguration complete message.

In a possible design, the indication information includes at least one piece of changed waypoint information in the first flight path.

In an implementation, the communication apparatus 700 may perform the following functions:
The receiving unit 701 is configured to receive indication information from a terminal device, where the indication information indicates that a first flight path is available for the terminal device.

The sending unit 702 is configured to send a first message to the terminal device, where the first message indicates handing over the terminal device to a second network device, the first message includes request information and/or a second condition, the request information indicates the terminal device to report a flight path to the second network device, the second condition is a trigger condition for the terminal device to report a flight path, the first message further indicates the terminal device to send a second message to the second network device, the second message includes the first flight path, and the first flight path is a path on which the terminal device is to fly.

The communication apparatus may further include another unit, for example, a processing unit. The processing unit may be configured to perform processing such as parsing the indication information. The processing unit may be further configured to perform a function such as generating the first message. This is not limited in this application.

In a possible design, the second condition includes: a change range between the first flight path and a second flight path is in a preset range, and the first flight path is a flight path obtained by updating the second flight path.

In a possible design, that the change range between the first flight path and the second flight path is in the preset range includes: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range.

In a possible design, a configuration manner of the second condition includes a manner of configuring by the first network device or a manner of configuring by the second network device.

In a possible design, the first message is a radio resource control RRC reconfiguration message, and the second message is an RRC reconfiguration complete message.

In a possible design, the indication information includes at least one piece of changed waypoint information in the first flight path.

In an implementation, the communication apparatus 700 may perform the following functions:
The receiving unit 701 is configured to: obtain a second condition from a first network device, and update the second condition when a second network device satisfies a third condition.

The sending unit 702 is configured to send a first message to the first network device, where the first message indicates handing over a terminal device to the second network device, the first message includes request information and/or a second condition, the request information indicates the terminal device to report a flight path to the second network device, the second condition is a trigger condition for the terminal device to report a flight path, and a configuration manner of the second condition includes a manner of configuring by the second network device.

The receiving unit 701 is further configured to receive a second message from the terminal device, where the second message includes a first flight path, and the first flight path is a path on which the terminal device is to fly.

The communication apparatus may further include another unit, for example, a processing unit. The processing unit may be configured to perform processing such as parsing the second condition and the second message. The processing unit may be further configured to perform a function such as generating the first message. This is not limited in this application.

In a possible design, when the second network device does not satisfy the third condition, the first message includes the request information, and the configuration manner of the second condition includes a manner of configuring by the first network device.

In a possible design, the second condition includes: a change range between the first flight path and a second flight path is in a preset range, and the first flight path is a flight path obtained by updating the second flight path.

In a possible design, that the change range between the first flight path and the second flight path is in the preset range includes: A difference between a quantity of waypoints included in the first flight path and a quantity of waypoints included in the second flight path is in a first preset range; a location deviation between the first flight path and the second flight path is in a second preset range; and/or an arrival time deviation between the first flight path and the second flight path is in a third preset range.

In a possible design, the first message is a radio resource control RRC reconfiguration message, and the second message is an RRC reconfiguration complete message.

The foregoing is merely an example. The sending unit and the receiving unit in the communication apparatus 700 may further perform another function. For more detailed descriptions, refer to related descriptions in the foregoing method embodiments. Details are not described herein again.

In the foregoing embodiments provided in this application, the method provided in embodiments of this application is described from the perspective of the communication apparatus as an execution body. To implement functions in the methods provided in the foregoing embodiments of this application, a communication apparatus may include a hardware structure and/or a software module, to implement the foregoing functions by using the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

For example, when hardware is used for implementation, for hardware implementation of the communication apparatus, refer to FIG. 8 and related descriptions of FIG. 8.

Refer to FIG. 8. The communication apparatus may include one or more processors 802, a memory 803, one or more applications (not shown), and one or more computer programs 804. The foregoing components may be connected through one or more communication buses 801. The one or more computer programs 804 are stored in the memory 803, and are configured to be executed by the one or more processors 802. The one or more computer programs 804 include instructions, and the instructions may be used to perform the method in any one of the foregoing embodiments. The one or more processors 802 may perform functions of the receiving unit 701 and the sending unit 702.

An embodiment of this application further provides a computer-readable storage medium. The computer-readable storage medium stores computer instructions. When the computer instructions are run on a communication apparatus, the communication apparatus is enabled to implement the communication method in the foregoing embodiments.

An embodiment of this application further provides a computer program product. When the computer program product is run on a computer, the computer is enabled to perform the communication method in the foregoing embodiments.

The communication apparatus, the computer-readable storage medium, the computer program product, or the chip provided in embodiments of this application are all configured to perform the corresponding methods provided above. Therefore, for beneficial effects that can be achieved by the communication apparatus, the computer-readable storage medium, the computer program product, and the chip, refer to the beneficial effects of the corresponding methods provided above. Details are not described herein again.

Based on the foregoing descriptions of the implementations, a person skilled in the art may understand that for the purpose of convenient and brief description, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A communication method, applied to a terminal device, wherein the method comprises:

   receiving a first message from a first network device, wherein the first message indicates handing over the terminal device to a second network device; and
   sending a second message to the second network device, wherein the second message comprises indication information when a first condition is satisfied, the indication information indicates that a first flight path is available for the terminal device, and the first flight path is a path on which the terminal device is to fly.

2. The method according to claim 1, wherein the first condition is that the terminal device does not send the indication information to the first network device, or the first condition is that the terminal device does not send the first flight path to the first network device.

3. The method according to claim 2, wherein that the terminal device does not send the indication information to the first network device comprises:
   before the first message from the first network device is received, the indication information is not sent to the first network device.

4. The method according to claim 1, wherein that the second message comprises the indication information when the first condition is satisfied comprises:
   when the first condition and a second condition are satisfied, the second message comprises the indication information, the second condition comprises: a change range between the first flight path and the second flight path is in a preset range, and the first flight path is a flight path obtained by updating the second flight path.

5. The method according to claim 4, wherein that the change range between the first flight path and the second flight path is in the preset range comprises:

   a difference between a quantity of waypoints comprised in the first flight path and a quantity of waypoints comprised in the second flight path is in a first preset range;
   a location deviation between the first flight path and the second flight path is in a second preset range; and/or
   an arrival time deviation between the first flight path and the second flight path is in a third preset range.

6. The method according to any one of claims 1 to 5, wherein the method further comprises:
   sending a third message to the second network device, wherein when the second message comprises the indication information, the third message does not comprise the indication information.

7. A communication method, applied to a second network device, wherein the method comprises:

   sending a first message to a first network device, wherein the first message indicates handing over a terminal device to the second network device; and

receiving a second message from the terminal device, wherein the second message comprises indication information when a first condition is satisfied, the indication information indicates that a first flight path is available for the terminal device, and the first flight path is a path on which the terminal device is to fly.

8. The method according to claim 7, wherein the first condition is that the terminal device does not send the indication information to the first network device, or the first condition is that the terminal device does not send the first flight path to the first network device.

9. The method according to claim 7 or 8, wherein that the second message comprises the indication information when the first condition is satisfied comprises:

    when the first condition and a second condition are satisfied, the second message comprises the indication information, the second condition comprises: a change range between the first flight path and the second flight path is in a preset range, and the first flight path is a flight path obtained by updating the second flight path.

10. The method according to claim 9, wherein that the change range between the first flight path and the second flight path is in the preset range comprises:

    a difference between a quantity of waypoints comprised in the first flight path and a quantity of waypoints comprised in the second flight path is in a first preset range; a location deviation between the first flight path and the second flight path is in a second preset range; and/or an arrival time deviation between the first flight path and the second flight path is in a third preset range.

11. The method according to any one of claims 7 to 10, wherein the method further comprises:

    receiving a third message from the terminal device, wherein when the second message comprises the indication information, the third message does not comprise the indication information.

12. A communication method, applied to a first network device, wherein the method comprises:

    receiving indication information from a terminal device, wherein the indication information indicates that a first flight path is available for the terminal device; and sending a first message to the terminal device, wherein the first message indicates handing over the terminal device to a second network device, the first message comprises request information and/or a second condition, the request information indicates the terminal device to report a flight path to the second network device, the second condition is a trigger condition for the terminal device to report a flight path, the first message indicates the terminal device to send a second message to the second network device, the second message comprises the first flight path, and the first flight path is a path on which the terminal device is to fly.

13. The method according to claim 12, wherein the second condition comprises: a change range between the first flight path and the second flight path is in a preset range, and the first flight path is a flight path obtained by updating the second flight path.

14. The method according to claim 13, wherein that the change range between the first flight path and the second flight path is in the preset range comprises:

    a difference between a quantity of waypoints comprised in the first flight path and a quantity of waypoints comprised in the second flight path is in a first preset range; a location deviation between the first flight path and the second flight path is in a second preset range; and/or an arrival time deviation between the first flight path and the second flight path is in a third preset range.

15. The method according to claim 12, wherein the indication information comprises at least one piece of changed waypoint information in the first flight path.

16. A communication method, applied to a second network device, wherein the method comprises:

    obtaining a second condition from a first network device, and updating the second condition when the second network device satisfies a third condition; sending a first message to the first network device, wherein the first message indicates handing over the terminal device to the second network device, the first message comprises request information and/or a second condition, the request information indicates the terminal device to report a flight path to the second network device, the second condition is a trigger condition for the terminal device to report a flight path, and a configuration manner of the second condition comprises a manner of configuring by the second network device; and

receiving a second message from the terminal device, wherein the second message comprises a first flight path, and the first flight path is a path on which the terminal device is to fly.

17. The method according to claim 16, wherein the method further comprises:
when the second network device does not satisfy the third condition, the first message comprises the request information, and the configuration manner of the second condition comprises a manner of configuring by the first network device.

18. The method according to claim 16 or 17, wherein the second condition comprises: a change range between the first flight path and the second flight path is in a preset range, and the first flight path is a flight path obtained by updating the second flight path.

19. A communication method, applied to a terminal device, wherein the method comprises:

receiving a first message from a first network device, wherein the first message indicates handing over the terminal device to a second network device; and
sending a third message to the second network device, wherein the third message is used to transmit first assistance information of the terminal device, the third message does not comprise indication information, the indication information indicates that a first flight path is available for the terminal device, and the first flight path is a path on which the terminal device is to fly.

20. The method according to claim 19, wherein sending the third message to the second network device comprises:
if a fifth condition is satisfied, sending the third message to the second network device.

21. The method according to claim 20, wherein the fifth condition comprises at least one of the following:
a fourth message is sent to the second network device in a first time period, or the terminal device is configured to provide the fourth message, wherein the fourth message is used to transmit the first assistance information of the terminal device.

22. The method according to claim 21, wherein the fourth message is determined based on first configuration information.

23. The method according to claim 22, wherein the first configuration information comprises a cell group and/or the indication information.

24. The method according to any one of claims 21 to 23, wherein the first time period is determined based on the first message received by the terminal device from the first network device.

25. A communication method, applied to a terminal device, wherein the method comprises:

receiving a first message from a first network device, wherein the first message indicates handing over the terminal device to a second network device; and
if a fifth condition is satisfied, skipping sending a third message to the second network device, wherein the third message is used to transmit first assistance information of the terminal device.

26. A communication apparatus, comprising a processor and a memory, wherein
the processor is configured to execute a computer program or instructions stored in the memory, to enable the communication apparatus to implement the method according to any one of claims 1 to 25.

27. A computer-readable storage medium, storing a computer program or instructions, wherein when the computer program or the instructions are run on a computer, the computer-readable storage medium is enabled to implement the method according to any one of claims 1 to 25.

28. A chip, comprising a processor, wherein the processor is coupled to a memory, and is configured to execute a computer program or instructions stored in the memory, to enable the chip to implement the method according to any one of claims 1 to 25.

29. A communication system, comprising a terminal device and a second network device, wherein the terminal device is configured to implement the method according to any one of claims 1 to 6, or configured to implement the method according to any one of claims 19 to 24, or configured to implement the method according to claim 25; and
the second network device, wherein the second network device is configured to implement the method according to any one of claims 7 to 11.

30. A communication system, comprising a first network device and a second network device, wherein the first network device is configured to implement the method according to any one of claims 12 to 15; and
the second network device, wherein the second network device is configured to implement the method according to any one of claims 16 to 18.

```
┌──────────┐                           ┌──────────┐
│   User   │                           │ Network  │
│equipment │                           │  device  │
└────┬─────┘                           └────┬─────┘
     │                                      │
     │   S101: RRC setup request message    │
     │─────────────────────────────────────▶│
     │                                      │
     │      S102: RRC setup message         │
     │◀─────────────────────────────────────│
     │                                      │
     │  S103: RRC setup complete message    │
     │─────────────────────────────────────▶│
     │                                      │
     │                                      │
```

FIG. 1

```
┌──────────┐                           ┌──────────┐
│   User   │                           │ Network  │
│equipment │                           │  device  │
└────┬─────┘                           └────┬─────┘
     │                                      │
     │  S201: UE information request message│
     │◀─────────────────────────────────────│
     │                                      │
     │ S202: UE information response message│
     │─────────────────────────────────────▶│
     │                                      │
     │                                      │
```

FIG. 2

Unmanned aerial vehicle

Source network device

Target network device

Flight path

● Waypoint information

FIG. 3

FIG. 4A

EP 4 676 122 A1

S408: Digital sequence
number message

S409: RRC reconfiguration
complete message

S410: Handover
complete message

S411: Digital sequence
number message

S412: Path switching
request message

S413: Perform path switching in the
UPF network element

S414: Path switching
request acknowledgment
message

S415: Context release message

FIG. 4B

EP 4 676 122 A1

```
┌──────────┐        ┌──────────┐          ┌──────────┐
│ Terminal │        │First network│       │  Second  │
│  device  │        │  device  │          │network device│
└────┬─────┘        └────┬─────┘          └────┬─────┘
     │                   │                     │
     │   S501: First message                   │
     │◄──────────────────│                     │
     │                   │                     │
     │                   │  S502: Second message│
     │───────────────────┼────────────────────►│
     │                   │                     │
     │                   │                     │
```

FIG. 5

```
┌──────────┐        ┌──────────┐          ┌──────────┐
│ Terminal │        │First network│       │Second network│
│  device  │        │  device  │          │  device  │
└────┬─────┘        └────┬─────┘          └────┬─────┘
     │  S601: Indication │                     │
     │    information    │                     │
     │──────────────────►│                     │
     │                   │  S602: Handover     │
     │                   │  request message    │
     │                   │────────────────────►│
     │                   │                     │
     │                   │ S603: Handover request│
     │                   │ acknowledgment message│
     │                   │◄────────────────────│
     │  S604: First message                    │
     │◄──────────────────│                     │
     │                   │                     │
     │                   │  S605: Second message│
     │───────────────────┼────────────────────►│
     │                   │                     │
```

FIG. 6

700

Communication apparatus

701

Receiving unit

702

Sending unit

FIG. 7

801

804

Processor

Computer
program

Memory

802

803

FIG. 8

## INTERNATIONAL SEARCH REPORT

| International application No. |
| --- |
| **PCT/CN2024/082007** |

| A. | CLASSIFICATION OF SUBJECT MATTER |
| --- | --- |

H04W36/00(2009.01)i; H04W4/029(2018.01)i

According to International Patent Classification (IPC) or to both national classification and IPC

| B. | FIELDS SEARCHED |
| --- | --- |

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNABS, CNTXT, CNKI, VEN, DWPI, ENTXT, 3GPP, IEEE: 无人机, 切换, 路径, 指示, 请求, 上报, 报告, 触发, 条件, unmanned aerial vehicle, UAV, switch, hand off, handover, path, indication, request, report, trigger, condition

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 109314898 A (BEIJING XIAOMI MOBILE SOFTWARE CO., LTD.) 05 February 2019 (2019-02-05) abstract, and description, paragraphs 0002-0251 | 1-18, 26-30 |
| A | CN 108064465 A (BEIJING XIAOMI MOBILE SOFTWARE CO., LTD.) 22 May 2018 (2018-05-22) entire document | 1-18, 26-30 |
| A | CN 111435257 A (HUAWEI TECHNOLOGIES CO., LTD.) 21 July 2020 (2020-07-21) entire document | 1-18, 26-30 |
| A | CN 112088125 A (LENOVO (BEIJING) CO., LTD.) 15 December 2020 (2020-12-15) entire document | 1-18, 26-30 |
| A | CN 115336298 A (QUALCOMM INC.) 11 November 2022 (2022-11-11) entire document | 1-18, 26-30 |
| A | US 2020068584 A1 (KDDI CORPORATION) 27 February 2020 (2020-02-27) entire document | 1-18, 26-30 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 May 2024** | **04 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/082007** |

**C.    DOCUMENTS CONSIDERED TO BE RELEVANT**

| Category* | Citation of document, with indication, where appropriate, of the relevant passages | Relevant to claim No. |
|---|---|---|
| A | NOKIA et al. "R2-1713264 Mobility Enhancements for UAVs - Planned Route" *3GPP TSG-RAN WG2 #100*, 01 December 2017 (2017-12-01), entire document | 1-18, 26-30 |
| A | NOKIA et al. "R2-1807887 Text Proposal to 36.300: Flight Path Information" *3GPP TSG-RAN WG2 Meeting #102*, 25 May 2018 (2018-05-25), entire document | 1-18, 26-30 |

Form PCT/ISA/210 (second sheet) (July 2022)

## INTERNATIONAL SEARCH REPORT

International application No.

**PCT/CN2024/082007**

| Box No. III | Observations where unity of invention is lacking (Continuation of item 3 of first sheet) |
| --- | --- |

This International Searching Authority found multiple inventions in this international application, as follows:

I: Claims 1 and 7, and claims 26-29, when referring to claims 1 and 7.

II: Claims 12 and 16, and claims 26-28 and 30, when referring to claims 12 and 16.

III: Claim 19, and claims 26-29, when referring to claim 19.

IV: Claim 25, and claims 26-29, when referring to claim 25.

The same or corresponding features between the claims of Groups I and II and the claims of Group III and between the claims of Groups I and II and the claims of Group IV relate to receiving a first message from a first network device, wherein the first message is used for instructing the terminal device to switch to a second network device.

However, the above-mentioned features are customary technical means in the art.

Therefore, the claims of Groups I and II and the claims of Group III and the claims of Group IV do not have a same or corresponding special technical feature, do not fall within a single general inventive concept, and therefore do not comply with PCT Rule 13.1-13.2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-18, claims 26-28, when referring to claims 1-18, claim 29, when referring to claims 1-11, and claim 30, when referring to claims 12-18**

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

| INTERNATIONAL SEARCH REPORT | International application No. |
|---|---|
| Information on patent family members | **PCT/CN2024/082007** |

| Patent document cited in search report | | | Publication date (day/month/year) | Patent family member(s) | | | Publication date (day/month/year) |
|---|---|---|---|---|---|---|---|
| CN | 109314898 | A | 05 February 2019 | US | 2021295711 | A1 | 23 September 2021 |
| | | | | EP | 3833059 | A1 | 09 June 2021 |
| | | | | WO | 2020029072 | A1 | 13 February 2020 |
| | | | | IN | 202147008771 | A | 05 March 2021 |
| CN | 108064465 | A | 22 May 2018 | WO | 2019084871 | A1 | 09 May 2019 |
| | | | | US | 2020258397 | A1 | 13 August 2020 |
| CN | 111435257 | A | 21 July 2020 | BR | 112021013779 | A2 | 21 September 2021 |
| | | | | US | 2021343164 | A1 | 04 November 2021 |
| | | | | EP | 3901726 | A1 | 27 October 2021 |
| | | | | WO | 2020147560 | A1 | 23 July 2020 |
| CN | 112088125 | A | 15 December 2020 | WO | 2019218114 | A1 | 21 November 2019 |
| | | | | EP | 3793896 | A1 | 24 March 2021 |
| | | | | US | 2021201685 | A1 | 01 July 2021 |
| | | | | CN | 116631231 | A | 22 August 2023 |
| CN | 115336298 | A | 11 November 2022 | EP | 4144107 | A1 | 08 March 2023 |
| | | | | WO | 2021221890 | A1 | 04 November 2021 |
| | | | | US | 2021343152 | A1 | 04 November 2021 |
| | | | | IN | 202227044098 | A | 07 October 2022 |
| US | 2020068584 | A1 | 27 February 2020 | WO | 2018105576 | A1 | 14 June 2018 |
| | | | | US | 2022053506 | A1 | 17 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310309453

- CN 202311506878